(19) Europäisches Patentamt
European Patent Office
Office européen des brevets

(11) **EP 0 571 592 B1**

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(21) Anmeldenummer: **92924719.5**

(22) Anmeldetag: **11.12.1992**

(51) Int Cl.[6]: **C01B 13/11**

(86) Internationale Anmeldenummer:
**PCT/EP92/02875**

(87) Internationale Veröffentlichungsnummer:
**WO 93/12035 (24.06.1993 Gazette 1993/15)**

(54) **VORRICHTUNG ZUR ERZEUGUNG VON OZON**

OZONE GENERATOR

GENERATEUR D'OZONE

(84) Benannte Vertragsstaaten:
**AT BE CH DE DK ES FR GB GR IE IT LI LU NL PT SE**

(30) Priorität: **12.12.1991 DE 4141025**

(43) Veröffentlichungstag der Anmeldung:
**01.12.1993 Patentblatt 1993/48**

(73) Patentinhaber: **RIMPLER, Manfred**
**D-30900 Wedemark (DE)**

(72) Erfinder: **RIMPLER, Manfred**
**D-30900 Wedemark (DE)**

(74) Vertreter:
**Hagemann, Heinrich, Dr. rer. nat., Dipl.-Chem. et al**
**Patentanwälte**
**Hagemann & Kehl**
**Postfach 86 03 29**
**D-81630 München (DE)**

(56) Entgegenhaltungen:
**DE-A- 299 248          US-A- 4 545 960**

- **DATABASE WPIL Week 8125, 8. Oktober 1980 Derwent Publications Ltd., London, GB; AN 81-45638D/25 & SU,A,768751**
- **PATENT ABSTRACTS OF JAPAN vol. 012, no. 472 (C-551)9. Dezember 1988 & JP-A-63190702**
- **DATABASE WPIL Week 8337, 28. Februar 1983 Derwent Publications Ltd., London, GB; AN 83-762944/37 & RO-A-81423**
- **PATENT ABSTRACTS OF JAPAN vol. 013, no. 579 (C-668)20. Dezember 1989 & JP-A-1242405**
- **DATABASE WPIL Week 8945, 27 September 1989, Derwent Publications Ltd. London GB; AN 89-327520/45**

**Beschreibung**

Die Erfindung betrifft eine Vorrichtung zur Erzeugung von Ozon mit einer Hochspannungsquelle und mindestens zwei im Abstand zueinander angeordneten Plattenelektroden mit einem dazwischen unter Ausbildung mindestens eines Strömungsweges angeordneten Dielektrikum, gemäß dem Oberbegriff des Anspruchs 1.

Ozon ist die dreiatomige Modifikation des Sauerstoffs und entsteht u.a. unter dem Einfluß eines elektrischen Feldes. Bei einer sogenannten stillen Entladung (Corona-Entladung) verwandelt sich Sauerstoff ($O_2$) zum Teil in Ozon. Die elektrische Entladung bewirkt eine teilweise Aufspaltung der $O_2$-Moleküle in freie Atome, die beim Zusammentreffen mit ungespaltenen Molekülen sich an diese anlagern. Bei der Bildung von Ozon wird elektrische Energie verbraucht; der Wärmegleichwert dafür beträgt 34,5 kcal je Mol $O_3$. Beim Erhitzen zerfällt Ozon, wobei Energie frei wird und $O_2$ entsteht. Das Gas zerfällt sehr schnell bei Temperaturen oberhalb von 100°C oder in der Gegenwart von Katalysatoren bei Raumtemperatur.
Ozon ist wesentlich reaktiver als Sauerstoff und somit ein äußerst kräftiges Oxydationsmittel, das in der Petrochemie zur Umwandlung von Olefinen in Aldehyde, Ketone oder Carboxylsäure verwendet wird. Weiter findet es als Bleichmittel für organische Substanzen und zur Sterilisierung von Trinkwasser und Arbeitsräumen Verwendung.

Großtechnisch wird Ozon im allgemeinen mittels stiller Entladung hergestellt. Dabei wird Sauerstoff oder ein Sauerstoff enthaltendes Gasgemisch durch einen flachen oder ringförmigen Spalt zwischen zwei Elektroden und einem dazwischen angeordneten Dielektrikum geleitet. Bei den verschiedenen bekannten Vorrichtungen und Verfahren zur Herstellung von Ozon wurde versucht, die Ozonausbeute zu erhöhen, wobei eine Erwärmung des Ozons zu vermeiden war.

Aus der DE-PS 31 08 563 ist eine Vorrichtung zur Erzeugung von Ozon bekannt, bei der Mittel vorgesehen sind, um die Freuquenz und die Amplitude der das elektrische Feld erzeugenden Wechselspannung zu steuern, um die Ozonausbeute zu verbessern. Dabei werden die Hochspannungsgeneratoren im Impulsmodus angesteuert oder man erhöht die Wechselstromfrequenz, da man in beiden Fällen eine erhöhte Ozonausbeute erhält. Allerdings erhöhen sich dabei ebenfalls die Wärmeverluste, wodurch sich bei der Ozonerzeugung nach dem Prinzip der stillen Entladung die Entladungsstrecken erwärmen, was dann zu einer Verminderung der Ozonausbeute führt.

Im Impulsmodus betriebene Vorrichtungen zur Erzeugung von Ozon, auch Ozonisatoren genannt, haben weiter den Nachteil, daß die Endtladung zwischen den beiden Elektroden aufgrund der Flankensteilheit punktförmig oder linsenförmig, d.h. nicht am gesamten Umfang der Elektrode, erfolgt. Dies führt dazu, daß an den Elektroden Einbrennlöcher entstehen, wodurch die Ozonausbeute herabgesetzt und eine einwandfreie Funktion der Vorrichtung beeinträchtig wird.

Aus der DE-OS 28 53 436 ist es bekannt, zur Steigerung der Ozonausbeute in den Entladungsstrecken durch Einsetzen von Körpern eine turbulente Strömung auszubilden. Dies führt jedoch zu einer gewissen Vergrößerung der Strömungskanäle, wodurch die Feldstärke erhöht werden muß. Weiter sind die bei diesem Verfahren verbleibenden laminaren Anteile in den Grenzschichten der Strömung noch relativ hoch.

Aus der DE-OS 26 44 978 ist eine Vorrichtung zur Erzeugung von Ozon auf der Basis einer Wechselstromhochspannung unter Ausschluß eines Dielektrikums bekannt. Dazu wird ein technisch hinreichend bekannter Plattenaufbau benötigt, um zwei Plattenelektroden auf Distanz anzuordnen, zwischen denen stromanschlußfrei mindestens eine bipolare Elektrode angeordnet ist.

Schließlich beschreibt die DE-PS 299 248 eine Vorrichtung, mit fixierten Elektroden, bei der der Abstand der Elektroden mit hoher Genauigkeit gleichbleibend verwirklicht werden muß, um sogenannte Spitzenentladungen zu vermeiden. Aus diesem Grunde wurde der fixierte Nichtleiter mit einem Metallbelag bespritzt, um den gleichbleibenden Abstand zwischen den Elektroden zu gewährleisten.

Aus JP-A-1 242 405 ist ein Ozonizator mit schwingfähigen Plattenelektroden bekannt.

Es ist daher Aufgabe der vorliegenden Erfindung, eine Vorrichtung der eingangs genannten Art zur Erzeugung von Ozon zu schaffen, bei der in den Strömungskanälen auf eine einfache Weise eine turbulente Strömung ausgebildet wird bei gleichzeitiger Vergleichmäßigung der Flächenverteilung der Entladungskanäle zur Erhöhung der Effektivität.

Erfindungsgemäß wird diese Aufgabe dadurch gelöst, daß

- mindestens eine der Plattenelektroden schwingfähig ist,

- die Plattenelektrode aus zwei Lagen elektrisch leitenden Materials besteht, wovon mindestens eine Lage schwingfähig ist,

- zwischen den beiden Lagen ein federnd-dämpfend wirkendes Material angeordnet ist und

- die beiden Lagen zur Ermöglichung von Schwingungen der Elektrode befestigt sind.

Mit einer derartigen Vorrichtung ist es möglich, durch Anlegen einer niederfrequenten Wechselspannung und/oder geeigneter Strömungsgeschwindigkeit des zu behandelnden Mediums die Elektroden in Schwingungen zu versetzen, wodurch sich in den Strömungswegen bzw.-kanälen zwischen den Elektroden und dem Dielektrikum eine turbulente Strömung ausbildet. Insbesondere findet durch die schwingenden Elektroden eine Ablösung der Grenzschicht statt, in der sonst überlicherweise eine laminare Strömung vorherrscht.

Die Breite der Strömungswege und die Strömungsgeschwindigkeit sind so bemessen, daß die Ausbildung der turbulenten Strömung gewährleistet ist.

Bekannterweise ergibt sich die Art der Strömung (laminar oder turbulent) aus dem Wert der Reynolds-Zahl.

$$Re = \frac{w * d * p}{\mu} = \frac{w * d}{v}$$

wobei

w= die mittlere Strömungsgeschwindigkeit, m/s; d = der Rohrdurchmesser, m;
$\mu$= die dynamische Zähigkeit, kg/m s;
p= die Dichte der Flüssigkeit, kg/m;
v= die kinematische Zähigkeit, m/s
ist.

Wenn der Strömungsquerschnitt nicht kreisförmig ist, wird in den Ausdruck für Re der äquivalente Durchmesser eingesetzt, der dem Vielfachen hydraulischen Radius entspricht.

Der hydraulische Radius r stellt das Verhältnis der Fläche des Strömungsquerschnitts zu dem von der Strömung umspülten (benetzten) Umfang U dar.

$$r_h = \frac{f}{U}$$

Für ein Rohr von kreisförmigem Querschnitt, das voll durchströmt wird, ist

$$r_h = \frac{d^2}{4\,d} = \frac{d}{4}$$

Folglich kann man für eine Strömung von nichtkreisförmigem Querschnitt statt des Durchmessers den äquivalenten Durchmesser einsetzen:

$$d_{\ddot{a}} = 4r_h = \frac{4f}{4}$$

Im allgemeinen liegt bei einer turbulenten Strömung die Reynolds-Zahl über 2.300, wobei bei Re > 10.000 eine absolut turbulente Strömung vorliegt.

Durch die beschriebene erfindungsgemäße Ausbildung der Strömungswege und die dadurch erzwungene turbulente Strömung wird ein gleichmäßig verteiltes Feld der Funkenentladungen erreicht und werden pro Zeiteinheit wesentlich mehr Gaspartikel in die Nähe der Elektrodenoberfläche gebracht. Von besonderem Vorteil ist dabei, daß viele kleine Entladungen entstehen, die zu einer wesentlich geringeren Wärmeentwicklung führen, die üblicherweise einer effektiven Ozonausbeute entgegensteht, so daß als Kühlmedium Umgebungsluft völlig ausreicht.

Vorteilhafte Ausgestaltungen der Erfindungen ergeben sich aus den Unteransprüchen.

So ist vorgesehen, daß gemäß einer vorteilhaften Ausgestaltung der Erfindung beide Lagen schwingfähig sind. Hierdurch wird die Möglichkeit der Erzeugung einer turbulenten Strömung verbessert.

Eine weitere vorteilhafte Ausgestaltung der Erfindung sieht vor, daß die beiden schwingfähigen Lagen jeweils an den Enden zusammengeführt sind, wodurch sich eine einfache Lagerung der Plattenelektrode ergibt.

Gemäß einer weiteren vorteilhaften Ausgestaltung der Erfindung sind mehrere Elektroden mit jeweils zwischen zwei Elektroden angeordneten Dielektrika vorhanden und als eine Untereinheit zusammengefaßt, wobei die Elektroden derart parallel geschaltet sind, daß eine Elektrodengruppe auf Erdpotential gelegt ist und die andere Elektrodengruppe an der Hochspannung anliegt. Dabei können mehrere Untereinheiten zu einem Aggregat zusammengefaßt sein.

Gemäß einer weiteren vorteilhaften Ausgestaltung der Erfindung ist vorgesehen, daß das Aggregat von einer gemeinsamen Gasverteilungseinheit aus beaufschlagbar ist. Dabei können die schwingfähigen Lagen aus elektrisch leitenden - auch behandelten - Folien bestehen.

Eine weitere mögliche Ausgestaltung der Erfindung sieht vor, daß die schwingfähigen Lagen aus elektrisch leitenden Blechen bestehen.

Zweckmäßigerweise bestehen die schwingfähigen Lagen aus Platin, Titan, verzinktem Eisen oder Aluminium. Diese Metalle gewährleisten eine gute Ausbildung des elektrischen Feldes. Dabei können die Beschichtungen Platin, Titan, verzinktes Eisen oder Aluminium als Folien, Bleche oder Drahtgeflechte ausgebildet sein.

Gemäß einer weiteren vorteilhaften Ausgestaltung der Erfindung ist vorgesehen, daß die schwingfähigen Lagen Löcher aufweisen. Hierdurch wird nicht nur die Ablösung der Grenzschicht und damit die Erzeugung einer vollkommen turbulenten Strömung sichergestellt, sondern weiter ermöglichen diese Löcher bei einer Zusammenfassung von mehreren Einheiten einen Gasaustausch zwischen den einzelnen Strömungswegen, wodurch weiter die Turbulenz der Strömung erhöht wird.

Um eine unerwünscht hohe Schwingungsamplitude der Elektroden zu vermeiden, ist es möglich, in der Nähe der Elektrodenenden Führungsnuten vorzusehen. Eine Zusammenführung der Beschichtungen an den Rändern der Elektroden und eine entsprechende Lagerung dieser Ränder in Führungsnuten gewährleistet eine ungehemmte Ausbildung der niederfrequenten Schwingung der Elektroden, eine Führung der Strömung und ein in sich geschlossenes Feder-Dämpfung-Masse-System.

Zur weiteren Steigerung der Effektivität ist es ebenfalls möglich, diese mit mehr als zwei schwingfähigen Lagen längs und/oder quer zur Strömungsrichtung aus elektrisch leitenden Material zu versehen, die durch z.B phasenverschobene Stromführung gesteuerte Verhältnisbewegungen durchführen können.

Denkbar ist darüber hinaus auch die Hintereinanderschaltung von Elektroden mit bestimmter Länge in Strömungsrichtung.

Zweckmäßigerweise wird die Feder-Dämpfung der Elektroden geregelt, um die für den Gasdurchfluß notwendigen Spaltbreiten zu gewährleisten.

Durch geeignete Regelvorrichtungen ist es weiter möglich, die Spaltbreite der einzelnen Strömungswege zu steuern.

Eine weitere vorteilhafte Einflußnahme auf die Schwingungen der Elektroden wird dadurch erreicht, daß die Senkenverteilung der flexiblen Lagen der Elektroden regelbar ist.

Obwohl jedes leitende oder nicht leitende federnd-dämpfend wirkende Material als Medium zwischen den flexiblen Lagen verwendet werden kann, haben sich Glasfasern als besonders vorteilhaft erwiesen.

Ausführungsbeispiele der Erfindung sind in der Zeichnung dargestellt und werden im Folgenden näher beschrieben. Es zeigen:

Fig. 1    eine prinzipielle Schaltungsanordnung der Vorrichtung in einer Schnittansicht;

Fig. 2    eine schematische Anordnung mehrerer Einheiten gemäß Fig. 1;

Fig. 3    eine prinzipielle Anordnung von entgegengesetzt gepolten Elektroden, die eine Untereinheit bilden; und

Fig. 4.    eine Zusammenfassung mehrerer Untereinheiten zu einem Aggregat.

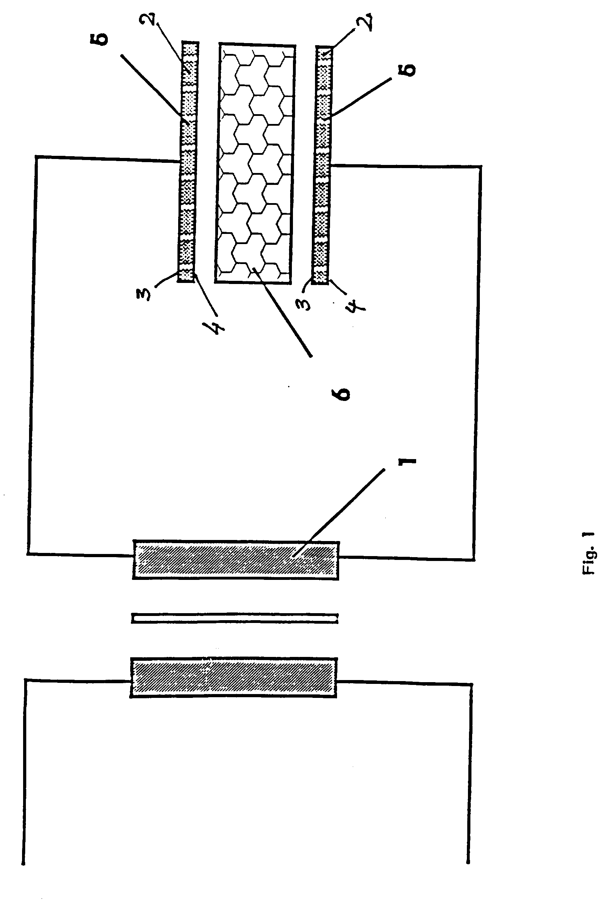

Fig. 1 zeigt schematisch eine erste Ausführungsform der Vorrichtung zur Erzeugung von Ozon, wobei die beiden Elektroden 5 mit der Sekundärspule 1 eines Hochspannungstransformators verbunden sind. Die Hochspannung liegt je nach Bedarf zwischen 5 und 30 kV. Der in Fig. 1 dargestellte Hochspannungstransformator ist für eine Frequenz von 50 Hz ausgelegt. Zwischen den beiden Elektroden 5 ist zur Ausbildung von z.B. zwei Strömungswegen ein Dielektrikum 6 angeordnet.

Die Elektroden 5 bestehen jeweils aus einem elastischem Substrat 2 mit einer auf der Substratoberfläche angeordneten flexiblen Beschichtung 3, 4 aus einem elektrisch leitenden Material. Die Elektroden 5 weisen senkrecht zu den Strömungswegen verlaufende, durchgehende Löcher auf. Die flexiblen Beschichtungen 3, 4 bestehen vorzugsweise aus Platin, Titan, verzinktem Eisen oder Aluminium. Sie können als Folien, Bleche oder Drahtgeflechte ausgebildet sein. Es ist ebenfalls möglich, das Substrat 2 oder die Folie 3, 4 mit einem elektrisch leitenden Material zu bedampfen. Das elastische Substrat 2 besteht vorzugsweise aus Glasfasern.

Wird an die beschriebene Vorrichtung eine Hochspannung zur Erzeugung eines elektrischen Feldes angelegt, so werden die Elektroden 5 in niederfrequente Schwingungen versetzt. Hierdurch wird das in den Spalten zwischen den Elektroden 5 und dem Dielektrikum 6 strömende Gas ebenfalls in Schwingungen versetzt, wodurch das Entstehen einer turbulenten Strömung unterstützt wird.

Dadurch ist es möglich, daß pro Zeiteinheit wesentlich mehr Gaspartikel in die Nähe der Elektrodenoberfläche gebracht werden und daß man ein gleichmäßiger verteiltes Feld der Funkenentladung erhält.

Bei der Primärnetzspannung von 220 Volt liegen bei dem in Fig. 1 dargestellten Ausführungsbeispiel auf der Sekundärseite des Hochspannungstransformators ca. 10 kV an. Im Vergleich zu herkömmlichen Ozonisatoren liefert diese Vorrichtung eine um ca. 25% höhere Ozonausbeute aus Luft.

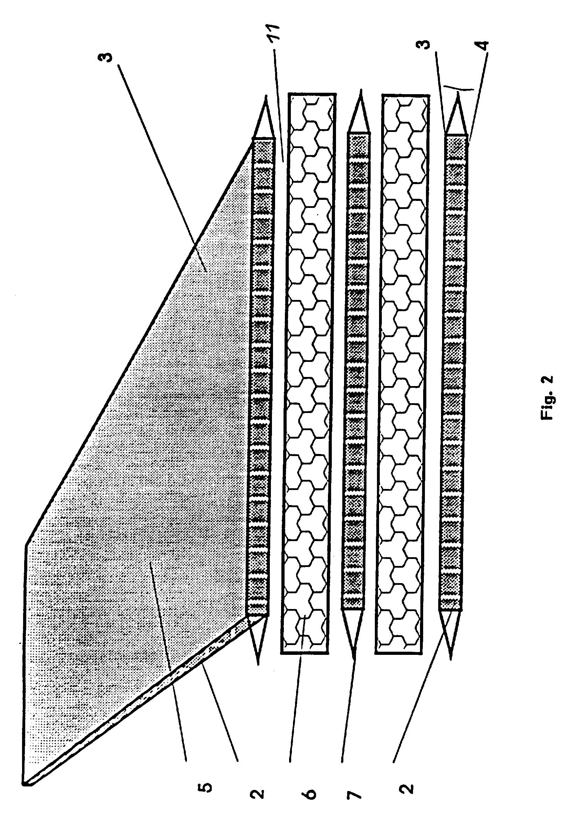

Fig. 2 zeigt eine Zusammenfassung mehrerer Einheiten gemäß Fig. 1, wobei die Ränder 7 der flexiblen Beschichtungen 3, 4 zusammengeführt und miteinander zur Bildung einer Kante verbunden sind. Diese Kante wird in geeignete Führungsnuten eines Gehäuses eingesetzt, so daß die Ausbildung der Schwingungen der einzelnen Elektroden 5 nicht behindert aber begrenzt sind. Weiter sind in den Elektroden 5 senkrent zu den Strömungswegen 11 verlaufende, durchgehende Löcher ausgebildet. Durch diese Löcher wird ein Gas-Austausch zwischen den einzelen Strömungswegen ermöglicht, wodurch weiter eine gleichförmige Verteilung, d.h. die Ausbildung der turbulenten Strömung, verbessert wird.

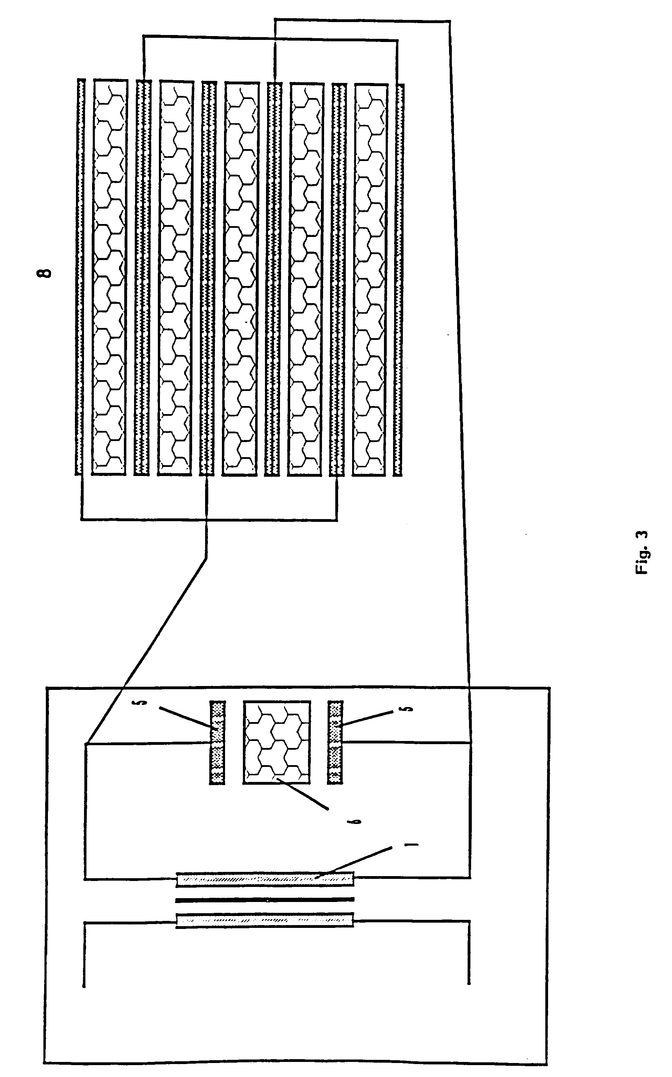

Fig. 3 zeigt eine Ausführungsform, die aus mehreren Elektroden 5 und dazwischen angeordneten Dielektrika 6 besteht. Bei dieser Einheit 8 sind zwei Elektrodengruppen parallel geschaltet, wobei eine Elektrodengruppe geerdet ist und die andere Elektrodengruppe ein Hochspannungspotential aufweist. Die so gebildete Einheit 8 ist in einem Gehäuse angeordnet, das gasdicht abgeschlossen ist, so daß sie von dem Gas durchströmt werden kann.

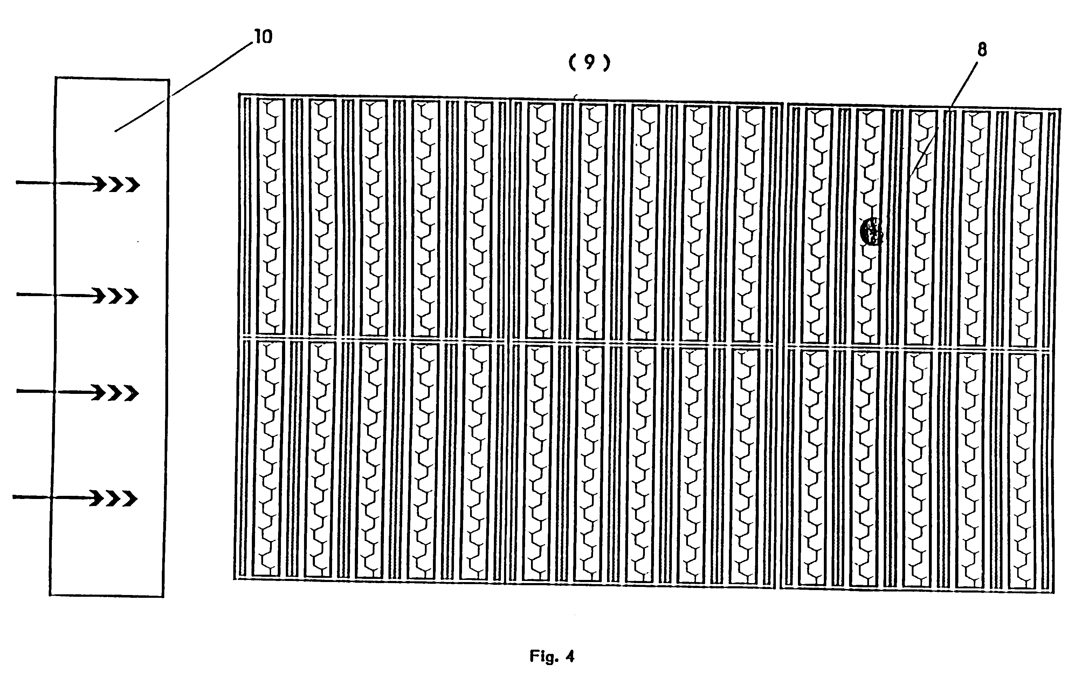

Fig. 4 zeigt eine weitere Ausführungsform, bestehend aus mehreren Einheiten gemäß Fig. 3. Mit der Erfindung ist es somit möglich, auf einfache Weise die Vorrichtung je nach Bedarf zu dimensionieren.

**Patentansprüche**

1.  Vorrichtung zur Erzeugung von Ozon mit einer Hochspannungsquelle und mindestens zwei im Abstand zueinander angeordneten Plattenelektroden mit einem dazwischen unter Ausbildung mindestens eines Strömungsweges angeordneten Dielektrikum, dadurch gekennzeichnet, daß

    -   mindestens eine der Plattenelektroden schwingfähig ist,

    -   die Plattenelektrode (5) aus zwei Lagen (3,4) elektrisch leitenden Materials besteht, wovon mindestens eine Lage (3,4) schwingfähig ist,

    -   zwischen den beiden Lagen (3,4) ein federnd-dämpfend wirkendes Material (2) angeordnet ist und

- die beiden Lagen (3,4) zur Ermöglichung von Schwingungen der Elektrode (5) befestigt sind.

2. Vorrichtung nach Anspruch 1, dadurch gekennzeichnet, daß beide Lagen (3,4) schwingfähig sind.

3. Vorrichtung nach Anspruch 2, dadurch gekennzeichnet, daß die beiden schwingfähigen Lagen (3,4) jeweils an ihren Enden (7) zusammengeführt sind.

4. Vorrichtung nach mindestens einem der Ansprüche 1-3, dadurch gekennzeichnet, daß mehrere Elektroden (5) mit jeweils zwischen zwei Elektroden (5) angeordneten Dielektrika (6) vorhanden und als eine Untereinheit (8) zusammengefaßt sind, wobei die Elektroden (5) derart parallel geschaltet sind, daß eine Elektrodengruppe auf Erdpotential gelegt ist und die andere Elektrodengruppe an der Hochspannung anliegt.

5. Vorrichtung nach Anspruch 4, dadurch gekennzeichnet, daß mehrere Untereinheiten (8) zu einem Aggregat (9) zusammengefaßt sind.

6. Vorrichtung nach Anspruch 5, dadurch gekennzeichnet, daß das Aggregat (9) von einer gemeinsamen Gasverteilungseinheit (10) aus beaufschlagbar ist.

7. Vorrichtung nach mindestens einem der Ansprüche 1 bis 6, dadurch gekennzeichnet, daß die schwingfähigen Lagen (3,4) aus elektrisch leitenden - auch behandelten - Folien bestehen.

8. Vorrichtung nach mindestens einem der Ansprüche 1 bis 7, dadurch gekennzeichnet, daß die schwingfähigen Lagen (3,4) aus elektrisch leitenden Blechen bestehen.

9. Vorrichtung nach Anspruch 7, dadurch gekennzeichnet, daß die schwingfähigen Lagen (3,4) aus Platin, Titan, verzinktem Eisen oder Aluminium bestehen.

10. Vorrichtung nach mindestens einem der Ansprüche 1 bis 9, dadurch gekennzeichnet, daß die schwingfähigen Lagen (3,4) Löcher aufweisen.

11. Vorrichtung nach mindestens einem der Ansprüche 1 bis 10, dadurch gekennzeichnet, daß die schwingfähigen Lagen (3,4) aus einem Drahtgeflecht bestehen.

12. Vorrichtung nach mindestens einem der Ansprüche 1 bis 11, gekennzeichnet durch Führungsnuten zur Schwingungsbegrenzung der Elektroden (5).

13. Vorrichtung nach mindestens einem der Ansprüche 1 bis 12, dadurch gekennzeichnet, daß die Feder-Dämpfung der Elektroden (5) zur Gewährleistung der für die Gasdurchfuhr notwendigen Spaltbreiten regelbar ist.

14. Vorrichtung nach mindestens einem der Ansprüche 1 bis 13, dadurch gekennzeichnet, daß die Spaltbreiten regelbar sind.

15. Vorrichtung nach mindestens einem der Ansprüche 1 bis 14, dadurch gekennzeichnet, daß die Senkenverteilung der flexiblen Lagen (3,4) der Elektroden (5) regelbar ist.

16. Vorrichtung nach mindestens einem der Ansprüche 1 bis 15, dadurch gekennzeichnet, daß das federnd-dämpfend wirkende Material (2) aus Glasfasern besteht.

**Claims**

1. A device for generating ozone with a high voltage source and at least two plate electrodes arranged at a distance apart with a dielectric arranged between the said plate electrodes to form at least one flow path, characterised in that

   - at least one of the electrodes is capable of vibrating,

   - the plate electrodes (5) comprises two layers (3, 4) of electrically-conducting material, with at least one layer (3, 4) capable of vibrating,

   - a resilient-damping acting material (2) is arranged between the two layers (3, 4), and

   - the two layers (3, 4) are secured to facilitate vibration of the electrodes (5).

2. A device according to claim 1, characterised in that both layers (3, 4) are capable of vibrating.

3. A device according to claim 2, characterised in that the two layers (3, 4) capable of vibrating are joined together at their ends (7).

4. A device according to any one of claims 1-3, characterised in that a plurality of electrodes (5) are provided with dielectrics (6) arranged between pairs of electrodes (5) and grouped together to form a sub-unit (8), with the electrodes (5) arranged in parallel such that one electrode group is at earth potential and the other electrode group is at high voltage.

5. A device according to claim 4, characterised in that the plurality of sub-units (8) are grouped together to form one unit (9).

6. A device according to claim 5, characterised in that the unit (9) is impinged upon by a common gas distribution unit (10).

7. A device according to any one of claims 1 to 6, characterised in that the layers (3, 4) capable of vibrating are comprised of electrically-conducting - and treated - foils.

8. A device according to any one of claims 1 to 7, characterised in that the layers (3, 4) capable of vibrating are comprised of electrically-conducting sheets.

9. A device according to claim 7, characterised in that the layers (3, 4) capable of vibrating are comprised of platinum, titanium, galvanised iron or aluminium.

10. A device according to at least one of claims 1 to 9, characterised in that the layers (3, 4) capable of vibrating are provided with holes.

11. A device according to at least one of claims 1 to 10, characterised in that the layers (3, 4) capable of vibrating are comprised of a wire mesh.

12. A device according to at least one of claims 1 to 11, characterised by guide grooves to limit the vibration of the electrodes (5).

13. A device according to at least one of claims 1 to 12, characterised in that the resilient-damping of the electrodes (5) is regulated to ensure the necessary gap widths for gas through flow.

14. A device according to at least one of claims 1 to 13, characterised in that the gap widths are regulated.

15. A device according to at least one of claims 1 to 14, characterised in that the drain distribution of the flexible layers (3, 4) of the electrodes is regulated.

16. A device according to at least one of claims 1 to 15 characterised in that the resilient-damping acting material (2) is comprised of fibre glass.

## Revendications

1. Dispositif de production d'ozone, comprenant une source de haute tension et au moins deux électrodes plates qui sont disposées à distance l'une de l'autre et entre lesquelles un diélectrique est inséré en ménageant au moins un trajet d'écoulement, caractérisé en ce que :

- au moins l'une des électrodes plates est vibrante,
- l'électrode plate (5) est constituée de deux couches (3, 4) de matériau électroconducteur, dont au moins une couche (3, 4) est vibrante,
- un matériau d'amortissement élastique (2) est disposé entre les deux couches (3, 4), et
- les deux couches (3, 4) sont fixées pour permettre à l'électrode (5) de vibrer.

2. Dispositif selon la revendication 1, caractérisé en ce que les deux couches (3, 4) sont vibrantes.

3. Dispositif selon la revendication 2, caractérisé en ce que les deux couches vibrantes (3, 4) se rejoignent à chacune de leurs extrémités (7).

4. Dispositif selon au moins l'une des revendications 1 à 3, caractérisé en ce qu'il est prévu plusieurs électrodes (5) qui comportent un diélectrique (6) disposé entre chaque paire d'électrodes (5) et qui sont regroupées sous la forme d'une sous-unité (8), les électrodes (5) étant connectées en parallèle de façon qu'un groupe d'électrodes soit mis à la terre et que l'autre groupe d'électrodes soit relié à la haute tension.

5. Dispositif selon la revendication 4, caractérisé en ce que plusieurs sous-unités (8) sont regroupées en un bloc (9).

6. Dispositif selon la revendication 5, caractérisé en ce que le bloc (9) peut être alimenté à partir d'une unité commune de distribution de gaz (10).

7. Dispositif selon au moins l'une des revendications 1 à 6, caractérisé en ce que les couches vibrantes (3, 4) sont constituées par des feuilles électroconductrices - même traitées.

8. Dispositif selon au moins l'une des revendications 1 à 7, caractérisé en ce que les couches vibrantes (3, 4) sont constituées de tôles électroconductrices.

9. Dispositif selon la revendication 7, caractérisé en ce que les couches vibrantes (3, 4) sont réalisées en platine, en titane, en fer galvanisé ou en aluminium.

10. Dispositif selon au moins l'une des revendications 1 à 9, caractérisé en ce que les couches vibrantes (3, 4) comportent des trous.

11. Dispositif selon au moins l'une des revendications 1 à 10, caractérisé en ce que les couches vibrantes (3, 4) sont réalisées sous forme de treillis de fil.

12. Dispositif selon au moins l'une des revendications 1 à 11, caractérisé en ce qu'il comprend des rainures de guidage pour limiter la vibration des électrodes (5).

13. Dispositif selon au moins l'une des revendications 1 à 12, caractérisé en ce que l'amortissement élastique des électrodes (5) est réglable pour obtenir avec certitude les largeurs d'interstice nécessaires au passage du gaz.

14. Dispositif selon au moins l'une des revendications 1 à 13, caractérisé en ce que les largeurs d'interstice sont modulables.

15. Dispositif selon au moins l'une des revendications 1 à 14, caractérisé en ce que la répartition d'affaissement des couches flexibles (3, 4) des électrodes (5) est réglable.

16. Dispositif selon au moins l'une des revendications 1 à 15, caractérisé en ce que le matériau d'amortissement élastique (2) est réalisé en fibres de verre.

Fig. 1

Fig. 2

Fig. 3

EP 0 571 592 B1

Fig. 4